(19) Europäisches Patentamt
European Patent Office
Office européen des brevets

(11) EP 3 950 738 A1

(12) # EUROPEAN PATENT APPLICATION
published in accordance with Art. 153(4) EPC

(43) Date of publication:
**09.02.2022 Bulletin 2022/06**

(21) Application number: **20784548.8**

(22) Date of filing: **23.03.2020**

(51) International Patent Classification (IPC):
***C08F 210/00*** *(2006.01)* ***C08F 210/02*** *(2006.01)*
***C08F 210/06*** *(2006.01)* ***C08L 23/00*** *(2006.01)*

(52) Cooperative Patent Classification (CPC):
**C08F 210/00; C08F 210/02; C08F 210/06; C08L 23/00**

(86) International application number:
**PCT/JP2020/012653**

(87) International publication number:
**WO 2020/203402 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 JP 2019066865**

(71) Applicant: **Mitsui Chemicals, Inc.**
**Tokyo 105-7122 (JP)**

(72) Inventors:
- **YOSHIDA, Yuto**
  **Sodegaura-shi, Chiba 299-0265 (JP)**
- **TAKESHIMA, Atsushi**
  **Sodegaura-shi, Chiba 299-0265 (JP)**
- **SUZUKI, Terufumi**
  **Sodegaura-shi, Chiba 299-0265 (JP)**
- **MATSUNAGA, Kouji**
  **Sodegaura-shi, Chiba 299-0265 (JP)**
- **KAWABE, Kuniaki**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **RESIN COMPOSITION**

(57) In an embodiment, the present invention relates to a resin composition, a shaped article, a fiber, a film and a sheet. The resin composition includes two or more kinds of polyolefin resins (A), and 0.05 to 10 mass% of an α-olefin (co)polymer (B) satisfying requirements (b-1) to (b-3) described below. (b-1) A methyl group index is 40 to 60%. The methyl group index is a ratio of an integral of a peak observed in a range of 0.50 to 1.15 ppm to an integral of peaks observed in a range of 0.50 to 2.20 ppm in a $^{1}$H-NMR spectrum of a solution of the (co)polymer (B) in deuterated chloroform, positions of the peaks being calculated relative to a solvent peak at 7.24 ppm assigned to $CHCl_3$ in deuterated chloroform as a reference. (b-2) A weight average molecular weight determined by GPC is 1,500 to 20,000. (b-3) No melting point is observed at temperatures ranging from -100 to 150°C in DSC.

EP 3 950 738 A1

**Description**

TECHNICAL FIELD

In an embodiment, the present invention relates to resin compositions, shaped articles, fibers, films and sheets.

BACKGROUND ART

Polyolefin resins such as polypropylene and polyethylene are general-purpose thermoplastic resins which are inexpensive and have numerous superior properties such as formability, chemical resistance, weather resistance, water resistance, and mechanical and electrical properties. To take advantage of these characteristics, polyolefin resins are conventionally used as products such as injection molded products, extruded products and compression molded products in the form of, for example, sheets, films and other shaped articles in a wide range of fields including food containers, automobile materials, electrical appliance housings and building materials.
Unfortunately, a single polyolefin resin is sometimes incapable of offering satisfactory properties. Thus, two or more kinds of polyolefin resins are often used in combination as a polyolefin alloy.
For example, Patent Literature 1 uses a blend polymer of high-density polyethylene and polypropylene for the purpose of improving the surface gloss of blow molded products. Further, Patent Literature 2 discloses a technique in which high-molecular weight polyethylene is added in order to improve the formability of polypropylene in shaping processes such as vacuum forming, pressure forming, blow molding and expansion molding.
In polyolefin alloys including two or more kinds of polyolefin resins, unfortunately, it is often the case that the resins do not have sufficient compatibility with one another and take a phase-separated structure. In such cases, the structure is fragile at the interfaces between the phases and, for example, sometimes performs poorly in mechanical properties as measured by, for example, a tensile test. Further, the interfaces between the phases reflect light or refract light at different refractive indexes to impair the beauty of shaped articles in some cases, for example, cause a decrease in transparency of shaped articles. Furthermore, formabilities are sometimes deteriorated.
To improve the compatibility between polyolefin resins, attempts have been made in which an additive is added to a polyolefin alloy.
For example, in Patent Literature 3, polyethylene is added to polypropylene while also adding a polyethylene wax in order to improve the compatibility between the polypropylene and the polyethylene.

CITATION LIST

PATENT LITERATURE

Patent Literature 1: JP-A-S62-59646
Patent Literature 2: JP-A-2002-80653
Patent Literature 3: WO 2016/068312


SUMMARY OF INVENTION

TECHNICAL PROBLEM

In Patent Literature 3 described above, formabilities, specifically, spinnability is improved by the use of the wax. However, the wax has insufficient compatibility with polyethylene and polypropylene and consequently shaped articles that are obtained sometimes do not attain sufficient transparency. Further enhancements in transparency are thus demanded.
In an embodiment, the present invention provides a resin composition which has excellent formabilities and can give shaped articles that exhibit excellent tensile characteristics and transparency in a well-balanced manner.

SOLUTION TO PROBLEM

The present inventors carried out studies and have consequently found that the problems discussed above can be solved by adopting configuration examples described below. Some of such configuration examples of the present invention are as follows.
[1] A resin composition comprising:

two or more kinds of polyolefin resins (A); and
an $\alpha$-olefin (co)polymer (B) satisfying requirements (b-1) to (b-3) described below,
a content of the $\alpha$-olefin (co)polymer (B) being 0.05 to 10 mass%,
(b-1) a methyl group index measured by $^1$H-NMR is 40 to 60% (the methyl group index is a ratio of an integral of a peak observed in a range of 0.50 to 1.15 ppm to an integral of peaks observed in a range of 0.50 to 2.20 ppm in a $^1$H-NMR spectrum of a solution of the (co)polymer (B) in deuterated chloroform, positions of the peaks being calculated relative to a solvent peak assigned to $CHCl_3$ in deuterated chloroform as a reference (7.24 ppm),
(b-2) a weight average molecular weight (Mw) determined by gel permeation chromatography (GPC) is 1,500 to 20,000,
(b-3) no melting point is observed at temperatures ranging from -100 to 150°C in differential scanning calorimetry (DSC).

[2] The resin composition described in [1], wherein the content of the (co)polymer (B) is 0.5 to 6 mass%.
[3] The resin composition described in [1] or [2], wherein the Mw of the (co)polymer (B) is 1,500 to 14,000.
[4] The resin composition described in any of [1] to [3], wherein the polyolefin resins (A) include an ethylene resin and a propylene resin.
[5] The resin composition described in any of [1] to [4], wherein the polyolefin resins (A) include an ethylene resin and a propylene resin, and
the contents of the ethylene resin and of the propylene resin are 1 to 20 mass% and 80 to 99 mass%, respectively, based on the total thereof taken as 100 mass%.
[6] The resin composition described in any of [1] to [5], wherein the polyolefin resins (A) include an ethylene resin and a propylene resin, and
the contents of the ethylene resin and of the propylene resin are 2 to 10 mass% and 90 to 98 mass%, respectively, based on the total thereof taken as 100 mass%.
[7] A method for producing a resin composition, comprising a step of mixing:

two or more kinds of polyolefin resins (A); and
an ethylene/$\alpha$-olefin copolymer (B') produced by a process ($\alpha$) described below and satisfying requirements (b-1) to (b-3) described below, the copolymer (B') being added so that the content thereof is 0.05 to 10 mass%,
(b-1) a methyl group index is 40 to 60% wherein the methyl group index is a ratio of an integral of a peak observed in a range of 0.50 to 1.15 ppm to an integral of peaks observed in a range of 0.50 to 2.20 ppm in a $^1$H-NMR spectrum of a solution of the copolymer (B') in deuterated chloroform, the positions of the peaks being calculated relative to a solvent peak at 7.24 ppm assigned to $CHCl_3$ in deuterated chloroform as a reference,
(b-2) a weight average molecular weight determined by gel permeation chromatography is 1,500 to 20,000,
(b-3) no melting point is observed at temperatures ranging from -100 to 150°C in differential scanning calorimetry,
the process ($\alpha$): a process comprising a step of polymerizing ethylene and an $\alpha$-olefin by solution polymerization in the presence of a catalyst system comprising:

a bridged metallocene compound (a) represented by the formula 1, and
at least one compound (b) selected from the group consisting of organoaluminum oxy compounds (b1) and compounds (b2) capable of reacting with the bridged metallocene compound (a) to form an ion pair,

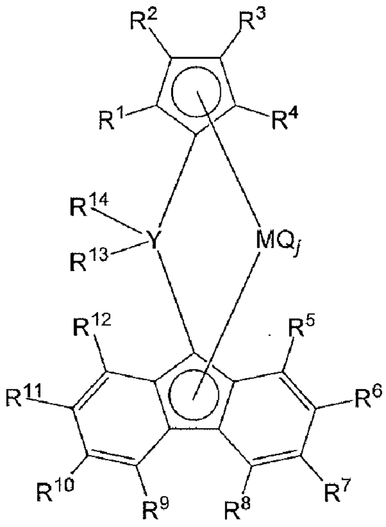

· · ·(Formula 1)

[Chem. 1]

[in the formula 1, $R^1$, $R^2$, $R^3$, $R^4$, $R^5$, $R^8$, $R^9$ and $R^{12}$ are each independently a hydrogen atom, a hydrocarbon group or a silicon-containing hydrocarbon group and a plurality of these groups that are adjacent to one another may be linked together to form a ring structure,

$R^6$ and $R^{11}$ are the same as each other and are hydrogen atoms, hydrocarbon groups or silicon-containing hydrocarbon groups,
$R^7$ and $R^{10}$ are the same as each other and are hydrogen atoms, hydrocarbon groups or silicon-containing hydrocarbon groups,
$R^6$ and $R^7$ may bond to a C2-C3 hydrocarbon to form a ring structure,
$R^{10}$ and $R^{11}$ may bond to a C2-C3 hydrocarbon to form a ring structure,
$R^6$, $R^7$, $R^{10}$ and $R^{11}$ are not hydrogen atoms at the same time;
Y is a carbon atom or a silicon atom;
$R^{13}$ and $R^{14}$ are each independently an aryl group;
M is Ti, Zr or Hf;
Q independently at each occurrence is a halogen atom, a hydrocarbon group, an anionic ligand or a neutral ligand capable of coordinating to a lone electron pair; and
j is an integer of 1 to 4].

[8] A shaped article formed from the resin composition described in any of [1] to [6].
[9] A fiber formed from the resin composition described in any of [1] to [6].
[10] A film formed from the resin composition described in any of [1] to [6].
[11] A sheet selected from a sheet formed from the resin composition described in any of [1] to [6], a sheet comprising the fiber described in [9], and a sheet comprising the film described in [10].

ADVANTAGEOUS EFFECTS OF INVENTION

The resin composition provided according to an embodiment of the present invention has excellent formabilities and can give shaped articles that exhibit excellent tensile characteristics and transparency in a well-balanced manner.

DESCRIPTION OF EMBODIMENTS

Hereinbelow, the present invention will be described in detail.
In the present specification, numerical ranges indicated with "to", for example, "X to Y" mean "not less than X and not more than Y".
In the present specification, the term "(co)polymer" is used as a general term including the concepts of both homopolymer and copolymer.
In the present specification, phrases such as "constituent unit derived from Z" in which Z represents an olefin

that is a raw material of a (co)polymer mean a "constituent unit corresponding to Z", for example, a constituent unit with a pair of bonding hands which results from the cleavage of a $\pi$ bond constituting a double bond in Z.

«Resin compositions»

A resin composition according to an embodiment of the present invention (hereinafter, also written as the "present composition") includes two or more kinds of polyolefin resins (A) and an $\alpha$-olefin (co)polymer (B) satisfying requirements (b-1) to (b-3) described later.
The present composition may be used as shaped articles for various applications. Specific examples of the shaped articles include fibers, films and sheets.

(Polyolefin resins (A))

The polyolefin resins (A) are homopolymers or copolymers of an olefin monomer. The resins (A) are distinct from the (co)polymers (B).
The resins (A) used in the present composition are not particularly limited as long as the resins are of two or more kinds. While three or more kinds of resins may be used in accordance with desired properties, two kinds of resins are preferably used in consideration of the compatibility of the resins.
The term "two kinds" not only means that the olefins constituting the resins are of different kinds, but also indicates other cases such as, for example, two kinds of polyethylenes having different properties, such as high-density polyethylene and low-density polyethylene, are used.
Examples of the olefins which may be used as the monomers include ethylene, propylene, 2-methylpropylene (isobutene, isobutylene), 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-pentene, 4-methyl-1-pentene, 8-methyl-1-nonene, 7-methyl-1-decene, 6-methyl-1-undecene and 6,8-dimethyl-1-decene.
These olefins may be used singly, or two or more may be used.
The monomers for the resins (A) may be cyclic olefins and/or cyclic or chain polyenes. Examples of such compounds include cyclopentene, cycloheptene, norbornene, 5-ethylidene-2-norbornene, dicyclopentadiene, 5-vinyl-2-norbornene, norbornadiene, methyltetrahydroindene, tetracyclododecene, 1,3-butadiene, isoprene, chloroprene, 1,4-hexadiene, 7-methyl-1,6-octadiene, 4-ethylidene-8-methyl-1,7-nonadiene and 4-ethylidene-1,7-undecadiene.
These monomers may be used singly, or two or more may be used.
The monomers for the resins (A) may be aromatic monomers and/or polar monomers. Examples of such compounds include styrene, $\alpha$-methylstyrene, vinyltoluene, isopropenyltoluene, vinyl acetate, (meth)acrylic acid, methyl (meth)acrylate and ethyl (meth)acrylate.
These monomers may be used singly, or two or more may be used.
When a polar monomer is used, the resin (A) may be a hydrolysis product of a resin obtained using a polar monomer, or may be an ionomer in the form of a salt with at least one metal selected from K, Na, Ca and Zn.
Examples of the resins (A) include ethylene resins, propylene resins, polyisobutylenes (polyisobutenes), poly-4-methyl-1-pentenes, ethylene/$\alpha$-olefin/polyene copolymers, styrene elastomers, ethylene/vinyl acetate copolymers, ethylene/vinyl alcohol copolymers, ethylene/(meth)acrylic acid copolymers, ethylene/methyl (meth)acrylate copolymers and ethylene/ethyl (meth)acrylate copolymers.
The resins (A) are preferably a combination of an ethylene resin and a propylene resin. In this case, the content of the ethylene resin is preferably 1 to 20 mass%, more preferably 2 to 10 mass%, and still more preferably 2 to 6 mass%, and the content of the propylene resin is preferably 80 to 99 mass%, more preferably 90 to 98 mass%, and still more preferably 92 to 98 mass%, relative to the total thereof (the total of the ethylene resin and the propylene resin) taken as 100 mass%.
If the mass ratio of the ethylene resin exceeds the upper limit described above, especially exceeds 10 mass%, the compatibility between the ethylene resin and the propylene resin is lowered, and the resin composition that is obtained may encounter difficulties in attaining excellent formabilities or may encounter difficulties in giving shaped articles having excellent tensile properties and transparency. If, on the other hand, the mass ratio of the ethylene resin is below the lower limit described above, especially below 2 mass%, properties such as surface gloss, formabilities and electron beam resistance may not be sufficiently improved or imparted effectively.
The ethylene resins are a collection of ethylene homopolymers and ethylene/$\alpha$-olefin copolymers containing not less than 50 mol% and less than 100 mol% of constituent units derived from ethylene.
Examples of the ethylene resins include numerous polyethylenes such as low-density polyethylenes (LDPE), medium-density polyethylenes (MDPE), high-density polyethylenes (HDPE), very low-density polyethylenes (VLDPE), linear low-density polyethylenes (LLDPE), high-molecular weight polyethylenes (HMWPE) and ultrahigh-molecular

weight polyethylenes (UHMWPE).

The ethylene/α-olefin copolymers may be random copolymers or block copolymers, and may have any stereoregularity without limitation.

When the ethylene resin is an ethylene/α-olefin copolymer, the α-olefin that is copolymerized with ethylene is not particularly limited. α-Olefins having 3 to 20 carbon atoms, particularly 3 to 12 carbon atoms, are preferably used. Specific examples include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-pentene, 4-methyl-1-pentene, 8-methyl-1-nonene, 7-methyl-1-decene, 6-methyl-1-undecene and 6,8-dimethyl-1-decene. These α-olefins may be used singly, or two or more may be used.

The propylene resins are a collection of propylene homopolymers and propylene/α-olefin copolymers containing not less than 50 mol% and less than 100 mol% of constituent units derived from propylene.

The propylene/ethylene copolymer containing 50 mol% of constituent units derived from propylene is classified not as an ethylene resin but as a propylene resin.

The propylene/α-olefin copolymers may be random copolymers or block copolymers, and may have any stereoregularity without limitation.

When the propylene resin is a propylene/α-olefin copolymer, the α-olefin that is copolymerized with propylene may be any α-olefin other than propylene without limitation. α-Olefins having 2 or 4 to 20 carbon atoms, particularly 2 or 4 to 12 carbon atoms, are preferably used. Specific examples include ethylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-pentene, 4-methyl-1-pentene, 8-methyl-1-nonene, 7-methyl-1-decene, 6-methyl-1-undecene and 6,8-dimethyl-1-decene. These α-olefins may be used singly, or two or more may be used.

[Methods for producing polyolefin resins (A)]

The resins (A) may be produced by any methods without limitation. The production is possible by a conventionally known production method such as solution polymerization, bulk polymerization, suspension polymerization or emulsion polymerization, or a combination thereof.

For example, a monomer(s) may be homopolymerized or copolymerized in the presence of a magnesium chloride-supported titanium catalyst, a vanadium catalyst including a soluble vanadium compound and an alkylaluminum halide compound, or a metallocene catalyst including a metallocene compound and an organoaluminum oxy compound. Alternatively, a monomer(s) may be homopolymerized or copolymerized at a high temperature and a high pressure using a radical generator such as an organic peroxide or oxygen.

[Content of polyolefin resins (A)]

In the present composition taken as 100 mass%, the content of the resins (A) is preferably not less than 90 mass%, more preferably not less than 94 mass%, still more preferably not less than 95 mass%, further preferably not less than 96 mass%, and particularly preferably not less than 98 mass%, and is preferably not more than 99.95 mass%, more preferably not more than 99.9 mass%, still more preferably not more than 99.5 mass%, and particularly preferably not more than 99.25 mass%.

When the content of the resins (A) falls in the above range, shaped articles may be easily obtained which fully exhibit properties inherent to the resins (A).

(α-Olefin (co)polymers (B))

The α-olefin (co)polymer (B) satisfies requirements (b-1) to (b-3) described later.

In a preferred embodiment, the (co)polymer (B) is an ethylene/α-olefin copolymer that is produced by a process (α) described later and satisfies requirements (b-1) to (b-3) described later. Hereinbelow, this ethylene/α-olefin copolymer will be also written as the "copolymer (B')", and the α-olefin (co)polymer (B) and the copolymer (B') will be collectively written as the "(co)polymer (B)".

A single kind, or two or more kinds of (co)polymers (B) may be used in the present composition.

[Requirement (b-1)]

The (co)polymer (B) is characterized in that methyl groups represent a specific proportion of all the protons. In general, methyl group protons give rise to a peak on a high magnetic field side in $^1$H-NMR measurement ("Koubunshi Bunseki Handbook (Polymer Analysis Handbook)" (published from Asakura Publishing Co., Ltd., pp. 163-170)). Based

on this fact, the present invention measures the methyl groups based on the proportion of a peak observed on a high magnetic field side in $^1H$-NMR measurement as an indicator (hereinafter, the "methyl group index"). Specifically, the methyl group index is the ratio of the integral of a peak observed in the range of 0.50 to 1.15 ppm to the integral of peaks observed in the range of 0.50 to 2.20 ppm in a $^1H$-NMR spectrum of a solution of the (co)polymer (B) in deuterated chloroform, the positions of the peaks being calculated relative to a solvent peak assigned to $CHCl_3$ in deuterated chloroform as a reference (7.24 ppm).

Here, almost all the peaks based on the (co)polymer (B) are found in the range of 0.50 to 2.20 ppm. In this range, the peak assigned to methyl groups is frequently found in the range of 0.50 to 1.15 ppm.

The methyl group index of the (co)polymer (B) is 40 to 60%, and preferably 40 to 55%.

The above range of the methyl group index ensures that the compatibility will be optimized between the resins (A) and the (co)polymer (B), particularly between an ethylene resin and the (co)polymer (B) and between a propylene resin and the (co)polymer (B), and also ensures that the resins (A) will be highly effectively compatibilized with one another and the resin composition that is obtained will attain excellent formabilities and will give shaped articles that exhibit excellent tensile characteristics and transparency in a well-balanced manner. If, on the other hand, the methyl group index is outside the above range, the (co)polymer exhibits poor compatibility with the resins (A), with the result not only that enhancements in tensile properties, transparency and formabilities cannot be expected but also that the (co)polymer may bleed out or be poorly dispersed to cause problems such as deterioration of the appearance of shaped articles that are obtained, mold contamination during compression molding or injection molding, and pulsation/breakage of strands during extrusion.

[Requirement (b-2)]

The Mw of the (co)polymer (B) determined by GPC is 1,500 to 20,000, preferably 1,500 to 14,000, more preferably 1,500 to 11,000, still more preferably 1,500 to 10,000, and particularly preferably 2,500 to 10,000.

The smaller the molecular weight of the (co)polymer (B), the more the compatibility with the resins (A) is improved by the contribution of the entropy term. Thus, controlling of Mw is critical in order to appropriately control the compatibility. An excessively high Mw leads to a decrease in compatibility with the resins (A) and thus can be a cause of bleed out and/or poor dispersion. It is therefore preferable that the Mw of the (co)polymer (B) be not more than the upper limit of the range described above. If, on the other hand, the Mw is excessively low, the (co)polymer includes low-molecular weight components which easily bleed out to cause the problems mentioned above such as appearance deterioration and mold contamination in some cases. Further, such a (co)polymer is of low viscosity and can be a factor causing a marked decrease in the strength of shaped articles. It is therefore preferable that the Mw of the (co)polymer (B) be not less than the lower limit of the range described above.

The molecular weight distribution (Mw/Mn) of the (co)polymer (B) measured by GPC is not particularly limited, but is usually not more than 3, preferably not more than 2.5, and more preferably not more than 2, and is usually not less than 1.0, and preferably not less than 1.2.

An increase (a widening) in Mw/Mn indicates that the (co)polymer (B) includes a larger amount of high-molecular or low-molecular weight components that will bleed out to the surface, thus giving rise to a risk that the problems mentioned above such as appearance deterioration and mold contamination may be caused.

The Mw and the Mw/Mn of the (co)polymer (B) may be measured by GPC calibrated with standards (monodispersed polystyrenes) having known molecular weights.

[Requirement (b-3)

In the (co)polymer (B), no melting point is observed at temperatures ranging from -100 to 150°C in DSC.

If the α-olefin (co)polymer shows a melting point, that is, if the α-olefin (co)polymer has crystallinity, crystal interfaces are formed in shaped articles to cause deterioration in tensile properties and transparency in some cases. In view of this, the (co)polymer (B) is characterized in that no melting point is observed at temperatures ranging from -100°C to 150°C.

In the present invention, the phrase that no melting point is observed means that a heat of fusion (ΔH) (unit: J/g) is not substantially measured by DSC. The phrase that ΔH is not substantially measured means that no peaks are observed in DSC measurement or the ΔH that is measured is 1 J/g or less.

Specifically, the DSC may be performed by a method described in Examples later.

[Configurations of α-olefin (co)polymers (B)]

Specifically, the (co)polymer (B) may be a homopolymer of a C2-C20 α-olefin or a copolymer of two or more kinds of such α-olefins.

Examples of the C2-C20 α-olefins include linear α-olefins such as ethylene, propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene, and branched α-olefins such as 3-methyl-1-pentene, 4-methyl-1-pentene, 8-methyl-1-nonene, 7-methyl-1-decene, 6-methyl-1-undecene and 6,8-dimethyl-1-decene. These α-olefins may be used singly, or two or more may be used.

In a preferred embodiment, the (co)polymer (B) is an ethylene/α-olefin copolymer.

The α-olefin may be a C3 or higher α-olefin other than ethylene. Typical examples thereof include C3-C20 α-olefins such as propylene, 1-butene, 1-pentene, 1-hexene, 1-heptene, 1-octene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene. These α-olefins may be used singly, or two or more may be used.

In the ethylene/α-olefin copolymer, the content of constituent units derived from a C6-C20 α-olefin is less than 50 mol%.

Among those α-olefins mentioned above, C3-C10 α-olefins, particularly propylene, are preferable for reasons such as that the crystallinity is effectively lowered and the (co)polymer can be obtained in the liquid state, and that the (co)polymer exhibits high compatibility with the resins (A) with the result that the composition and shaped articles that are obtained easily attain desired effects.

The ethylene/α-olefin copolymer representing a preferred embodiment of the (co)polymer (B) preferably has a content of constituent units derived from ethylene (hereinafter, also written as "ethylene content") of 30 to 80 mol%, more preferably 40 to 75 mol%, still more preferably 40 to 60 mol%, particularly preferably 40 to 55 mol%, and most preferably 46 to 54 mol%. If the ethylene content is excessively high or excessively low, the crystallinity is so increased that shaped articles that are obtained may encounter difficulties in attaining excellent tensile properties and transparency.

The ethylene content may be measured from a $^{13}$C-NMR spectrum. For example, the ethylene content may be determined by the method described in Examples later or by the method described in "Koubunshi Bunseki Handbook (Polymer Analysis Handbook)" (published from Asakura Publishing Co., Ltd., pp. 163-170).

In the ethylene/α-olefin copolymer representing a preferred embodiment of the (co)polymer (B), the methyl group index is preferably 40 to 55%, and more preferably 45 to 52% for reasons such as that the compatibility with the resins (A) is further enhanced.

The copolymer (B') representing a preferred embodiment of the (co)polymer (B) is preferably a random copolymer, more preferably a liquid random copolymer, and particularly preferably a copolymer that is liquid at room temperature and has a structure in which α-olefin units are uniformly distributed in the copolymer chains.

The copolymer (B') is desirably a copolymer which has an ethylene content of, for example, 40 to 60 mol%, preferably 45 to 55 mol%, and a content of constituent units derived from an α-olefin, particularly a C3-C20 α-olefin, of, for example, 40 to 60 mol%, preferably 45 to 55 mol%.

The number average molecular weight (Mn) of the copolymer (B') determined by GPC is, for example, 500 to 10,000, and preferably 800 to 6,000, and the Mw/Mn is, for example, not more than 3, and preferably not more than 2.

The kinematic viscosity at 100°C (measured in accordance with the method described in JIS K 2283) of the copolymer (B') is, for example, 30 to 5,000 $mm^2/s$, and preferably 50 to 3,000 $mm^2/s$.

The pour point of the copolymer (B') measured in accordance with the method described in ASTM D97 is, for example, -45 to 30°C, and preferably -35 to 20°C.

The bromine value of the copolymer (B') measured in accordance with the method described in JIS K 2605 is, for example, not more than 0.1 g/100 g.

A bridged metallocene compound (a) represented by the formula 1 below has high polymerization activity particularly for the copolymerization of ethylene and an α-olefin. By using this bridged metallocene compound (a), polymerization is selectively terminated by the introduction of hydrogen to the molecular terminals. Thus, the copolymer (B') that is obtained has less unsaturated bonds and exhibits high thermal oxidation stability.

The copolymer (B') advantageously has high randomness and a controlled molecular weight distribution. In this case, the copolymer exhibits excellent fluidity in a wide range of temperatures. Thus, the present composition including such a copolymer (B') will attain excellent flexibility.

The ethylene/α-olefin copolymer representing a preferred embodiment of the (co)polymer (B) may be produced by a known method. In an exemplary method, ethylene and an α-olefin may be copolymerized in the presence of a catalyst that includes a transition metal compound such as of vanadium, zirconium, titanium or hafnium, and an organoaluminum compound (an organoaluminum oxy compound) and/or an ionized ionic compound. Examples of such methods include those described in WO 2000/34420, JP-A-S62-121710, WO 2004/29062, JP-A-2004-175707, WO 2001/27124 and European Patent Application Publication No. 2921509.

The copolymer (B') is produced by the following process (α).

The process (α): A process including a step of polymerizing ethylene and an α-olefin by solution polymerization in the presence of a catalyst system that includes:

a bridged metallocene compound (a) represented by the formula 1, and
at least one compound (b) selected from the group consisting of organoaluminum oxy compounds (b1) and compounds (b2) capable of reacting with the bridged metallocene compound (a) to form an ion pair.

[Chem. 2]

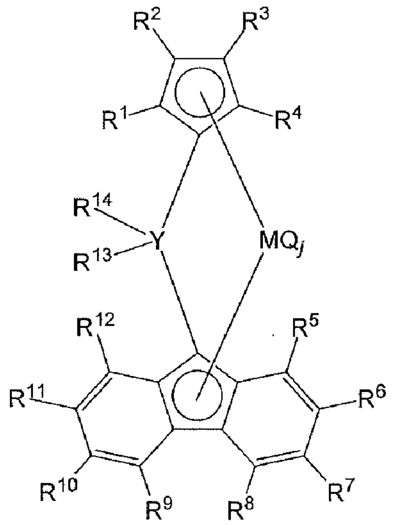

· · · (Formula 1)

[In the formula 1, $R^1$, $R^2$, $R^3$, $R^4$, $R^5$, $R^8$, $R^9$ and $R^{12}$ are each independently a hydrogen atom, a hydrocarbon group or a silicon-containing hydrocarbon group and a plurality of these groups that are adjacent to one another may be linked together to form a ring structure,

$R^6$ and $R^{11}$ are the same as each other and are hydrogen atoms, hydrocarbon groups or silicon-containing hydrocarbon groups,
$R^7$ and $R^{10}$ are the same as each other and are hydrogen atoms, hydrocarbon groups or silicon-containing hydrocarbon groups,
$R^6$ and $R^7$ may bond to a C2-C3 hydrocarbon to form a ring structure,
$R^{10}$ and $R^{11}$ may bond to a C2-C3 hydrocarbon to form a ring structure,
$R^6$, $R^7$, $R^{10}$ and $R^{11}$ are not hydrogen atoms at the same time;
Y is a carbon atom or a silicon atom;
$R^{13}$ and $R^{14}$ are each independently an aryl group;
M is Ti, Zr or Hf;
Q independently at each occurrence is a halogen atom, a hydrocarbon group, an anionic ligand or a neutral ligand capable of coordinating to a lone electron pair; and
j is an integer of 1 to 4.]

The number of carbon atoms in the hydrocarbon groups is preferably 1 to 20, more preferably 1 to 15, and still more preferably 4 to 10. Examples of the hydrocarbon groups include alkyl groups and aryl groups. The number of carbon atoms in the aryl groups is preferably 6 to 20, and more preferably 6 to 15.
Examples of the silicon-containing hydrocarbon groups include C3-C20 alkyl and aryl groups each containing 1 to 4 silicon atoms. Specific examples include trimethylsilyl group, tert-butyldimethylsilyl group and triphenylsilyl group.
In the formula 1, the cyclopentadienyl group may be substituted or unsubstituted.
In the formula 1,

(i) at least one of the substituents ($R^1$, $R^2$, $R^3$ and $R^4$) bonded to the cyclopentadienyl group is preferably a hydrocarbon group;
(ii) at least one of the substituents ($R^1$, $R^2$, $R^3$ and $R^4$) is more preferably a C4 or higher hydrocarbon group; and
(iii) the substituent ($R^2$ or $R^3$) bonded to the 3-position of the cyclopentadienyl group is most preferably a C4 or higher hydrocarbon group (for example, an n-butyl group).

When at least two of $R^1$, $R^2$, $R^3$ and $R^4$ are substituents (that is, are not hydrogen atoms), the substituents may

be the same as or different from one another, and at least one substituent is preferably a C4 or higher hydrocarbon group.

When the copolymer (B') is synthesized by high-temperature solution polymerization, it is preferable for taking advantage of high polymerization activity that $R^6$ and $R^{11}$ be not hydrogen atoms, and it is more preferable for the same purpose that $R^6$, $R^7$, $R^{10}$ and $R^{11}$ be not hydrogen atoms. $R^6$ and $R^{11}$ are, for example, the same C1-C20 hydrocarbon groups, and preferably tert-butyl groups. $R^7$ and $R^{10}$ are, for example, the same C1-C20 hydrocarbon groups, and preferably tert-butyl groups.

The main chain moiety (the bonding moiety Y) that connects the cyclopentadienyl group to the fluorenyl group is a covalently bonded bridge that imparts steric rigidity to the bridged metallocene compound (a). The moiety Y has two aryl groups ($R^{13}$ and $R^{14}$) which may be the same as or different from each other. That is, the cyclopentadienyl group and the fluorenyl group are linked via a covalently bonded bridge including aryl groups. From the point of view of easy production, it is preferable that $R^{13}$ and $R^{14}$ be the same groups.

Examples of the aryl groups represented by $R^{13}$ and $R^{14}$ include phenyl group, naphthyl group, anthracenyl group, and substituted aryl groups (phenyl group, naphthyl group and anthracenyl group substituted with one or more substituents in place of aromatic hydrogens ($sp^2$ hydrogens)). Examples of the substituents in the substituted aryl groups include C1-C20 hydrocarbon groups, C1-C20 silicon-containing hydrocarbon groups, and halogen atoms, with phenyl group being preferable.

Q is preferably a halogen atom or a C1-C10 hydrocarbon group. Examples of the halogen atoms include fluorine, chlorine, bromine and iodine atoms. Examples of the C1-C10 hydrocarbon groups include methyl group, ethyl group, n-propyl group, isopropyl group, 2-methylpropyl group, 1,1-dimethylpropyl group, 2,2-dimethylpropyl group, 1,1-diethylpropyl group, 1-ethyl-1-methylpropyl group, 1,1,2,2-tetramethylpropyl group, sec-butyl group, tert-butyl group, 1,1-dimethylbutyl group, 1,1,3-trimethylbutyl group, neopentyl group, cyclohexylmethyl group, cyclohexyl group and 1-methyl-1-cyclohexyl group.

When j is an integer of 2 or greater, the plurality of Q may be the same as or different from one another.

Examples of such bridged metallocene compounds (a) include:

ethylene[$\eta^5$-(3-tert-butyl-5-methylcyclopentadienyl)]($\eta^5$-fluorenyl)zirconium dichloride, ethylene [$\eta^5$- (3-tert-butyl-5-methylcyclopentadienyl)] [$\eta^5$-(3,6-di-tert-butylfluorenyl)]zirconium dichloride, ethylene [$\eta^5$- (3-tert-butyl-5-methylcyclopentadienyl)] [$\eta^5$-(2,7-di-tert-butylfluorenyl)]zirconium dichloride, ethylene[$\eta^5$-(3-tert-butyl-5-methylcyclopentadienyl)](octamethyloctahydrodibenzofluoren yl)zirconium dichloride, ethylene[$\eta^5$-(3-tert-butyl-5-methylcyclopentadienyl)(benzofluorenyl)zirconium dichloride, ethylene[$\eta^5$-(3-tert-butyl-5-methylcyclopentadienyl)](dibenzofluorenyl)zirconium dichloride, ethylene[$\eta^5$-(3-tert-butyl-5-methylcyclopentadienyl)](octahydrodibenzofluorenyl)zirconi um dichloride, ethylene[$\eta^5$-(3-tert-butyl-5-methylcyclopentadienyl)] [$\eta^5$-(2,7-diphenyl-3,6-di-tert-butylfluorenyl)]zirconium dichloride, ethylene[$\eta^5$-(3-tert-butyl-5-methylcyclopentadienyl)][$\eta^5$-(2,7-dimethyl-3,6-di-tert-butylfluorenyl)]zirconium dichloride,

ethylene[$\eta^5$-(3-tert-butylcyclopentadienyl)] ($\eta^5$-fluorenyl) zirconium dichloride, ethylene[$\eta^5$-(3-tert-butylcyclopentadienyl)][$\eta^5$-(3,6-di-tert-butylfluorenyl)]zirconium dichloride, ethylene[$\eta^5$-(3-tert-butylcyclopentadienyl)][$\eta^5$-(2,7-di-tert-butylfluorenyl)]zirconium dichloride, ethylene[$\eta^5$-(3-tert-butylcyclopentadienyl)](octamethyloctahydrodibenzofluorenyl) zirconium dichloride, ethylene[$\eta^5$-(3-tert-butylcyclopentadienyl)](benzofluorenyl)zirconium dichloride, ethylene[$\eta^5$-(3-tert-butylcyclopentadienyl)](dibenzofluorenyl)zirconium dichloride, ethylene[$\eta^5$-(3-tert-butylcyclopentadienyl)](octahydrodibenzofluorenyl)zirconium dichloride, ethylene[$\eta^5$-(3-tert-butylcyclopentadienyl)] [$\eta^5$-(2,7-diphenyl-3,6-di-tert-butylfluorenyl)]zirconium dichloride, ethylene[$\eta^5$-(3-tert-butylcyclopentadienyl)][$\eta^5$-(2,7-dimethyl-3,6-di-tert-butylfluorenyl)]zirconium dichloride,

ethylene[$\eta^5$-(3-n-butylcyclopentadienyl)] ($\eta^5$-fluorenyl) zirconium dichloride, ethylene[$\eta^5$-(3-n-butylcyclopentadienyl)][$\eta^5$-(3,6-di-tert-butylfluorenyl)]zirconium dichloride, ethylene[$\eta^5$-(3-n-butylcyclopentadienyl)][$\eta^5$-(2,7-di-tert-butylfluorenyl)]zirconium dichloride, ethylene[$\eta^5$-(3-n-butylcyclopentadienyl)](octamethyloctahydrodibenzofluorenyl) zirconium dichloride, ethylene[$\eta^5$-(3-n-butylcyclopentadienyl)](benzofluorenyl)zirconium dichloride, ethylene[$\eta^5$-(3-n-butylcyclopentadienyl)](dibenzofluorenyl)zirconium dichloride, ethylene[$\eta^5$-(3-n-butylcyclopentadienyl)](octahydrodibenzofluorenyl)zirconiu m dichloride, ethylene[$\eta^5$-(3-n-butylcyclopentadienyl)] [$\eta^5$-(2,7-diphenyl-3,6-di-tert-butylfluorenyl)]zirconium dichloride, ethylene[$\eta^5$-(3-n-butylcyclopentadienyl)] [$\eta^5$-(2,7-dimethyl-3,6-di-tert-butylfluorenyl)]zirconium dichloride,

diphenylmethylene[$\eta^5$-(3-tert-butyl-5-methylcyclopentadienyl) ] ($\eta^5$-fluorenyl) zirconium dichloride, diphenylmethylene[$\eta^5$-(3-tert-butyl-5-methylcyclopentadienyl)][$\eta^5$-(3,6-di-tert-butylfluorenyl)]zirconium dichloride, diphenylmethylene[$\eta^5$-(3-tert-butyl-5-methylcyclopentadienyl)][$\eta^5$-(2,7-di-tert-butylfluorenyl)]zirconium dichloride, diphenylmethylene[$\eta^5$-(3-tert-butyl-5-methylcyclopentadienyl)](octamethyloctahydrodibenzofluoren yl)zirconium dichloride, diphenylmethylene[$\eta^5$-(3-tert-butyl-5-methylcyclopentadienyl)] (benzofluorenyl)zirconium dichloride, diphenylmethylene[$\eta^5$-(3-tert-butyl-5-methylcyclopentadienyl)](dibenzofluorenyl)zirconium dichloride, diphenylmethylene[$\eta^5$-(3-tert-butyl-5-methylcyclopentadienyl)](octahydrodibenzofluorenyl)zirconi um dichloride, diphenylmethylene[$\eta^5$-(3-tert-butyl-5-methylcyclopentadienyl)] [$\eta^5$-(2,7-diphenyl-3,6-di-tert-butylfluorenyl)]zirconium dichloride, diphenyl-

methylene[η5-(3-tert-butyl-5-methylcyclopentadienyl)] [η5-(2,7-dimethyl-3,6-di-tert-butylfluorenyl)]zirconium dichloride,

diphenylmethylene[η5-(3-tert-butylcyclopentadienyl)](η5-fluorenyl)zirconium dichloride, diphenylmethylene[η5-(3-tert-butylcyclopentadienyl)] [η5-(3,6-di-tert-butylfluorenyl)]zirconium dichloride, diphenylmethylene[η5-(3-tert-butylcyclopentadienyl)] [η5-(2,7-di-tert-butylfluorenyl)]zirconium dichloride, diphenylmethylene[η5-(3-tert-butylcyclopentadienyl)](octamethyloctahydrodibenzofluoreny l)zirconium dichloride, diphenylmethylene[η5-(3-tert-butylcyclopentadienyl)](benzofluorenyl)zirconium dichloride, diphenylmethylene[η5-(3-tert-butylcyclopentadienyl)](dibenzofluorenyl)zirconium dichloride, diphenylmethylene[η5-(3-tert-butylcyclopentadienyl)](octahydrodibenzofluorenyl)zirconiu m dichloride, diphenylmethylene[η5-(3-tert-butylcyclopentadienyl)] [η5-(2,7-diphenyl-3,6-di-tert-butylfluorenyl)]zirconium dichloride, diphenylmethylene[η5-(3-tert-butylcyclopentadienyl)] [η5-(2,7-dimethyl-3,6-di-tert-butylfluorenyl)]zirconium dichloride,

diphenylmethylene[η5-(3-n-butylcyclopentadienyl)] (η5-fluorenyl) zirconium dichloride, diphenylmethylene[η5-(3-n-butylcyclopentadienyl)][η5-(3,6-di-tert-butylfluorenyl)]zirconium dichloride, diphenylmethylene[η5-(3-n-butylcyclopentadienyl)][η5-(2,7-di-tert-butylfluorenyl)]zirconium dichloride, diphenylmethylene[η5-(3-n-butylcyclopentadienyl)](octamethyloctahydrodibenzofluoreny l)zirconium dichloride, diphenylmethylene[η5-(3-n-butylcyclopentadienyl)](benzofluorenyl)zirconium dichloride, diphenylmethylene[η5-(3-n-butylcyclopentadienyl)](dibenzofluorenyl)zirconium dichloride, diphenylmethylene[η5-(3-n-butylcyclopentadienyl)](octahydrodibenzofluorenyl)zirconiu m dichloride, diphenylmethylene[η5-(3-n-butylcyclopentadienyl)] [η5-(2,7-diphenyl-3,6-di-tert-butylfluorenyl)]zirconium dichloride, diphenylmethylene[η5-(3-n-butylcyclopentadienyl)][η5-(2,7-dimethyl-3,6-di-tert-butylfluorenyl)]zirconium dichloride,

di(p-tolyl)methylene[η5-(3-tert-butyl-5-methylcyclopentadienyl)](η5-fluorenyl)zirconium dichloride, di(p-tolyl)methylene[η5-(3-tert-butyl-5-methylcyclopentadienyl)][η5-(3,6-di-tert-butylfluorenyl)]zirconium dichloride, di(p-tolyl)methylene[η5-(3-tert-butyl-5-methylcyclopentadienyl)] [η5-(2,7-di-tert-butylfluorenyl)]zirconium dichloride, di(p-tolyl)methylene[η5-(3-tert-butyl-5-methylcyclopentadienyl)](octamethyloctahydrodibenzofluoren yl)zirconium dichloride, di(p-tolyl)methylene[η5-(3-tert-butyl-5-methylcyclopentadienyl)] (benzofluorenyl)zirconium dichloride, di(p-tolyl)methylene[η5-(3-tert-butyl-5-methylcyclopentadienyl)](dibenzofluorenyl)zirconium dichloride, di(p-tolyl)methylene[η5-(3-tert-butyl-5-methylcyclopentadienyl)](octahydrodibenzofluorenyl)zirconi um dichloride, di(p-tolyl)methylene[η5-(3-tert-butyl-5-methylcyclopentadienyl)] [η5-(2,7-diphenyl-3,6-di-tert-butylfluorenyl)]zirconium dichloride, di(p-tolyl)methylene[η5-(3-tert-butyl-5-methylcyclopentadienyl)] [η5-(2,7-dimethyl-3,6-di-tert-butylfluorenyl)]zirconium dichloride,

di(p-tolyl)methylene[η5-(3-tert-butylcyclopentadienyl)](η5-fluorenyl)zirconium dichloride, di (p-tolyl) methylene [η5-(3-tert-butylcyclopentadienyl)] [η5-(3,6-di-tert-butylfluorenyl)]zirconium dichloride, di(p-tolyl)methylene[η5-(3-tert-butylcyclopentadienyl)] [η5-(2,7-di-tert-butylfluorenyl)]zirconium dichloride, di(p-tolyl)methylene[η5-(3-tert-butylcyclopentadienyl)](octamethyloctahydrodibenzofluoreny l) zirconium dichloride, di(p-tolyl)methylene[η5-(3-tert-butylcyclopentadienyl)](benzofluorenyl)zirconium dichloride, di(p-tolyl)methylene[η5-(3-tert-butylcyclopentadienyl)](dibenzofluorenyl)zirconium dichloride, di(p-tolyl)methylene[η5-(3-tert-butylcyclopentadienyl)](octahydrodibenzofluorenyl)zirconiu m dichloride, di(p-tolyl)methylene[η5-(3-tert-butylcyclopentadienyl)] [η5-(2,7-diphenyl-3,6-di-tert-butylfluorenyl)]zirconium dichloride, di(p-tolyl)methylene[η5-(3-tert-butylcyclopentadienyl)] [η5-(2,7-dimethyl-3,6-di-tert-butylfluorenyl)]zirconium dichloride,

di (p-tolyl) methylene [η5-(3-n-butylcyclopentadienyl)](η5-fluorenyl)zirconium dichloride, di(p-tolyl)methylene[η5-(3-n-butylcyclopentadienyl)] [η5-(3,6-di-tert-butylfluorenyl)]zirconium dichloride, di(p-tolyl)methylene[η5-(3-n-butylcyclopentadienyl)] [η5-(2,7-di-tert-butylfluorenyl)]zirconium dichloride, di(p-tolyl) methylene [η5-(3-n-butylcyclopentadienyl)](octamethyloctahydrodibenzofluoreny l)zirconium dichloride, di(p-tolyl)methylene[η5-(3-n-butylcyclopentadienyl)](benzofluorenyl)zirconium dichloride, di(p-tolyl)methylene[η5-(3-n-butylcyclopentadienyl)](dibenzofluorenyl)zirconium dichloride, di(p-tolyl)methylene[η5-(3-n-butylcyclopentadienyl)](octahydrodibenzofluorenyl)zirconiu m dichloride, di (p-tolyl) methylene [η5-(3-n-butylcyclopentadienyl)](2,7-diphenyl-3,6-di-tert-butylfluorenyl)zirconium dichloride, and di(p-tolyl) methylene [η5-(3-n-butylcyclopentadienyl)] [η5-(2,7-dimethyl-3,6-di-tert-butylfluorenyl)]zirconium dichloride.

Examples of the bridged metallocene compounds (a) further include compounds resulting from the substitution of the compounds described above with a hafnium atom or a titanium atom in place of the zirconium atom or with a methyl group in place of the chloro ligand.

The bridged metallocene compounds (a) may be used singly, or two or more may be used.

The organoaluminum oxy compound (b1) may be a conventional aluminoxane. For example, linear or cyclic aluminoxanes represented by the formulas 2 to 5 below may be used. The organoaluminum oxy compound (b1) may include a small amount of an organoaluminum compound.

The compounds (b1) may be used singly, or two or more may be used.

[Chem. 3]

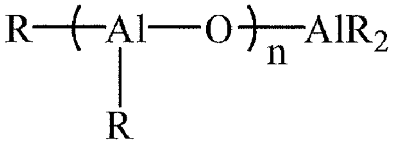

· · · (Formula 2)

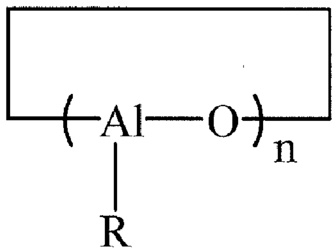

· · · (Formula 3)

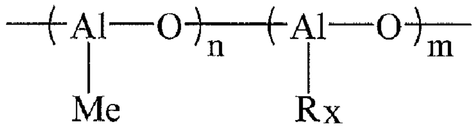

· · · (Formula 4)

In the formulas 2 to 4, R independently at each occurrence is a C1-C10 hydrocarbon group, Rx independently at each occurrence is a C2-C20 hydrocarbon group, and m and n are each independently an integer of 2 or greater, preferably an integer of 3 or greater, more preferably an integer of 10 to 70, and particularly preferably an integer of 10 to 50.

[Chem. 4]

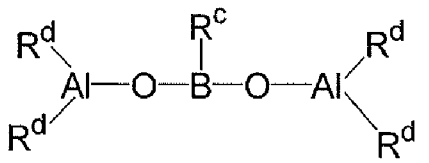

· · · (Formula 5)

In the formula 5, $R^c$ is a C1-C10 hydrocarbon group, and $R^d$ independently at each occurrence is a hydrogen atom, a halogen atom or a C1-C10 hydrocarbon group.

Methylaluminoxane, which is an example of the organoaluminum oxy compounds (b1), is generally used as an activator in polyolefin polymerization because of its high availability and high polymerization activity. Unfortunately, methylaluminoxane is hardly soluble in saturated hydrocarbons and is therefore used as a solution in an environmentally undesirable aromatic hydrocarbon such as toluene or benzene. To address this problem, in recent years, flexible bodies of methylaluminoxane represented by the formula 4 have been developed and used as aluminoxanes dissolved in a saturated hydrocarbon. As described in, for example, US Pat. No. 4,960,878 and US Pat. No. 5,041,584, such modified methylaluminoxanes represented by the formula 4 are prepared using trimethylaluminum and an alkylaluminum other than trimethylaluminum, for example, trimethylaluminum and triisobutylaluminum. Aluminoxanes in which Rx is an isobutyl group are commercially available in the form of saturated hydrocarbon solutions under the trade names of MMAO and TMAO (see Tosoh Finechem Corporation, Tosoh Research & Technology Review, Vol. 47, 55 (2003)).

The compound (b2) capable of reacting with the bridged metallocene compound (a) to form an ion pair may be, for example, a Lewis acid, an ionic compound, borane, a borane compound or a carborane compound. For example, these compounds are described in Korean Pat. No. 10-0551147, JP-A-H01-501950, JP-A-H03-179005, JP-A-H03-179006, JP-A-H03-207703, JP-A-H03-207704 and US Pat. No. 5,321,106. Where necessary, for example, heteropoly compounds, isopoly compounds, and ionic compounds described in JP-A-2004-51676 may be used.

The compounds (b2) may be used singly, or two or more may be used.

Examples of the Lewis acids include compounds represented by $BR_3$ (R independently at each occurrence is, for example, a fluoride, a substituted or unsubstituted C1-C20 alkyl group (for example, a methyl group) or a substituted or unsubstituted C6-C20 aryl group (for example, a phenyl group)). Some specific examples are trifluoroboron, triphenylboron, tris(4-fluorophenyl)boron, tris(3,5-difluorophenyl)boron, tris(pentafluorophenyl)boron and tris(p-tolyl)boron.

The use of the compound (b2) is economically advantageous because the amount of the compound used can be small as compared to when the compound (b1) is used.

The compound (b2) is preferably a compound represented by the following formula 6.

[Chem. 5]

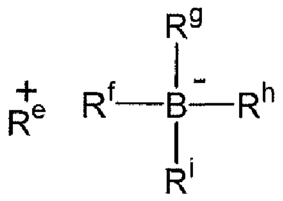

· · · (Formula 6)

$R^{e+}$ is $H^+$, a carbenium cation, an oxonium cation, an ammonium cation, a phosphonium cation, a cycloheptyltrienyl cation, or a ferrocenium cation having a transition metal.

Examples of the carbenium cations include tris(methylphenyl)carbenium cation and tris(dimethylphenyl)carbenium cation. Examples of the ammonium cations include dimethylanilinium cation.

$R^f$ to $R^i$ are each independently an organic group, preferably a substituted or unsubstituted C1-C20 hydrocarbon group, and more preferably a substituted or unsubstituted aryl group, for example, a pentafluorophenyl group.

Preferred examples of the compounds represented by the formula 6 include N,N-alkylanilinium salts, with specific examples including N,N-dimethylanilinium tetraphenylborate, N,N-dimethylanilinium tetrakis(pentafluorophenyl)borate, N,N-dimethylanilinium tetrakis(3,5-ditrifluoromethylphenyl)borate, N,N-diethylanilinium tetraphenylborate, N,N-diethylanilinium tetrakis(pentafluorophenyl)borate, N,N-diethylanilinium tetrakis(3,5-ditrifluoromethylphenyl)borate, N,N-2,4,6-pentamethylanilinium tetraphenylborate and N,N-2,4,6-pentamethylanilinium tetrakis(pentafluorophenyl)borate.

Where necessary, the catalyst system may further include an organoaluminum compound (c). The compound (c) serves to activate other compounds such as the bridged metallocene compound (a), the compound (b1) and the compound (b2).

Preferred examples of the compounds (c) include organoaluminum compounds represented by the formula 7 below, and complex alkylated compounds represented by the formula 8 below which contain a Group I metal of the periodic table and aluminum.

The compounds (c) may be used singly, or two or more may be used.

$$R^a_mAl(OR^b)_nH_pX_q \cdots \qquad \text{(Formula 7)}$$

In the formula 7, $R^a$ and $R^b$ are each independently a C1-C15, preferably C1-C4, hydrocarbon group, X is a halogen atom, m is an integer of $0 < m \leq 3$, n is an integer of $0 \leq n \leq 3$, p is an integer of $0 < p \leq 3$, q is an integer of $0 \leq q < 3$, and $m + n + p + q = 3$.

$$M^2AlR^a_4 \cdots \qquad \text{(Formula 8)}$$

In the formula 8, $M^2$ is Li, Na or K, and $R^a$ is a C1-C15, preferably C1-C4, hydrocarbon group.

Examples of the compounds represented by the formula 7 include trimethylaluminum and triisobutylaluminum, which are easily available.

Examples of the compounds represented by the formula 8 include $LiAl(C_2H_5)_4$ and $LiAl(C_7H_{15})_4$.

Compounds analogous to the compounds represented by the formula 7 may also be used as the compounds (c). Examples of such compounds include organoaluminum compounds in which at least two aluminum compounds are bonded via a nitrogen atom (such as, for example,

$$(C_2H_5)_2AlN(C_2H_5)Al(C_2H_5)_2).$$

In the process ($\alpha$), the amount in which the bridged metallocene compound (a) is used is preferably 5 to 50 mass% relative to all the components present in the catalyst system.

In the process ($\alpha$), the amount of the compound (b1) used is preferably 50 to 500 equivalents, the amount of the compound (b2) used is preferably 1 to 5 equivalents, and the amount of the compound (c) used is preferably 5 to 100 equivalents with respect to the number of moles of the bridged metallocene compound (a) used.

Examples of the configurations of the catalyst systems include the following [1] to [4].

[1] The system includes the bridged metallocene compound (a) and the compound (b1)
[2] The system includes the bridged metallocene compound (a), the compound (b1) and the compound (c).
[3] The system includes the bridged metallocene compound (a), the compound (b2) and the compound (c).
[4] The system includes the bridged metallocene compound (a), the compound (b1) and the compound (b2).

The bridged metallocene compound (a), the compound (b1), the compound (b2) and the compound (c) may be introduced into the reaction system in any order.
The copolymer (B') may be produced by solution polymerization of ethylene and an α-olefin in the presence of the catalyst system described above.
The α-olefin is preferably a C3-C20 α-olefin. Examples of the C3-C20 α-olefins include linear α-olefins such as propylene, 1-butene, 1-pentene and 1-hexene, and branched α-olefins such as isobutylene, 3-methyl-1-butene and 4-methyl-1-pentene. The α-olefins may be used singly, or two or more may be used.
The α-olefin is preferably a C3-C6 α-olefin, and more preferably propylene.
The solution polymerization may be carried out using a medium, for example, an inert solvent such as propane, butane or hexane, or the olefin monomer itself.
In the solution polymerization, the polymerization temperature is usually 80 to 150°C, and preferably 90 to 120°C, and the polymerization pressure is usually atmospheric pressure to 500 $kgf/cm^2$, and preferably atmospheric pressure to 50 $kgf/cm^2$. These conditions may be selected appropriately in accordance with factors such as reaction materials and reaction conditions.
The solution polymerization may be carried out batchwise, semi-continuously or continuously, and is preferably performed continuously.
The (co)polymer (B) used in the present composition may be the (co)polymer itself or a solution of the (co)polymer in a solvent.
Examples of the solvents include, but are not particularly limited to, aromatic hydrocarbon solvents such as xylene, toluene and ethylbenzene, aliphatic hydrocarbon solvents such as hexane, heptane, octane and decane, alicyclic hydrocarbon solvents such as cyclohexane, cyclohexene and methylcyclohexane, ester solvents such as ethyl acetate, n-butyl acetate, cellosolve acetate, propylene glycol monomethyl ether acetate, propylene glycol monoethyl ether acetate, 3-methoxybutyl acetate, ethylene glycol monoethyl ether acetate, ethylene glycol monomethyl ether acetate, diethylene glycol monoethyl ether acetate and diethylene glycol monomethyl ether acetate, ketone solvents such as methyl ethyl ketone and methyl isobutyl ketone, acetone and tetrahydrofuran. Among these, aromatic hydrocarbon solvents may be suitably used.
Two or more kinds of the solvents may be used.

[Content of (co)polymer (B)]

The content of the (co)polymer (B) in 100 mass% of the present composition is 0.05 to 10 mass%. The content of the (co)polymer (B) in 100 mass% of the present composition is preferably not less than 0.1 mass%, more preferably not less than 0.5 mass%, and particularly preferably not less than 0.75 mass%, and is preferably not more than 6 mass%, more preferably not more than 5 mass%, still more preferably not more than 4 mass%, and particularly preferably not more than 2 mass%.
When the content of the (co)polymer (B) is at or above the lower limit described above, the (co)polymer (B) offers sufficient effects in improving tensile properties, transparency and formabilities. When, on the other hand, the content of the (co)polymer (B) is at or below the upper limit described above, an advantage is obtained in that shaped articles which exhibit excellent tensile properties, transparency and formabilities in a well-balanced manner and are unlikely to suffer bleed-out of the (co)polymer (B) can be obtained easily.

[Other embodiments]

The resins (A) and the (co)polymer (B) may be the resins themselves described hereinabove or may be modified products obtained by modification, for example, graft modification, of the resins described hereinabove with any polar groups. When the (co)polymer (B) is such a modified product, the modified product satisfies the requirements (b-1) to (b-3) described hereinabove.
For example, the modification may be performed using a vinyl compound having a polar group, or a derivative thereof. Examples of the vinyl compounds having a polar group, and derivatives thereof include vinyl compounds having an oxygen-containing group such as acids, acid anhydrides, esters, alcohols, epoxies and ethers, vinyl compounds having a nitrogen-containing group such as isocyanates and amides, and vinyl compounds having a silicon-containing group such as vinylsilanes. Two or more kinds of the vinyl compounds and derivatives thereof may be used.
Among those compounds described above, vinyl compounds having an oxygen-containing group are preferable.

Specifically, for example, unsaturated epoxy monomers, unsaturated carboxylic acids, and derivatives thereof are preferable.

Examples of the unsaturated epoxy monomers include unsaturated glycidyl ethers and unsaturated glycidyl esters (for example, glycidyl methacrylate).

Examples of the unsaturated carboxylic acids include (meth)acrylic acid, maleic acid, fumaric acid, tetrahydrophthalic acid, itaconic acid, citraconic acid, crotonic acid, isocrotonic acid and nadic acid (endocis-bicyclo[2,2,1]hept-5-ene-2,3-dicarboxylic acid).

Examples of the derivatives of the unsaturated carboxylic acids include acid halide compounds, amide compounds, imide compounds, acid anhydrides and ester compounds of the unsaturated carboxylic acids described above. Specific examples include malenyl chloride, maleimide, maleic anhydride, citraconic anhydride, monomethyl maleate, dimethyl maleate and glycidyl maleate.

Among those described above, unsaturated dicarboxylic acids and acid anhydrides thereof are more preferable, and maleic acid, nadic acid and acid anhydrides thereof are particularly preferably used.

The vinyl compound having a polar group or the derivative thereof may be introduced for modification (be grafted) at any positions without limitation of the resins (A) and the (co)polymer (B).

The modified products of the resins (A) and the (co)polymer (B) described hereinabove may be synthesized by any of various known methods, for example, by the following method (1) or (2).

(1) The resins (A) or the (co)polymer (B) is charged into an apparatus such as an extruder or a batch reactor, and a modifier such as a vinyl compound having a polar group or a derivative thereof is added thereto and graft copolymerized.

(2) The resins (A) or the (co)polymer (B) is dissolved into a solvent, and a modifier such as a vinyl compound having a polar group or a derivative thereof is added thereto and graft copolymerized.

In any of the above methods, the graft copolymerization is preferably carried out in the presence of, for example, one, or two or more kinds of radical initiators to ensure that the vinyl compound having a polar group or the derivative thereof serving as a grafting monomer will be graft copolymerized efficiently.

Examples of the radical initiators include organic peroxides and azo compounds.

Examples of the organic peroxides include benzoyl peroxide, dichlorobenzoyl peroxide, dicumyl peroxide, di-tert-butyl peroxide, 2,5-dimethyl-2,5-di(tert-butylperoxy)-3-hexyne, 2,5-dimethyl-2,5-di(tert-butylperoxy)hexane and 1,4-bis(tert-butylperoxyisopropyl)benzene. Examples of the azo compounds include azobisisobutyronitrile and dimethyl azoisobutyrate.

Among those described above, in particular, dialkyl peroxides such as dicumyl peroxide, di-tert-butyl peroxide, 2,5-dimethyl-2,5-di(tert-butylperoxy)-3-hexyne, 2,5-dimethyl-2,5-di(tert-butylperoxy)hexane and 1,4-bis(tert-butylperoxyisopropyl)benzene are preferably used.

The radical initiator is usually used in an amount of 0.001 to 1 part by mass, preferably 0.003 to 0.5 parts by mass, and more preferably 0.05 to 0.3 parts by mass with respect to 100 parts by mass of the resins (A) or the (co)polymer (B).

The reaction temperature in the graft reaction is usually 60 to 350°C, and preferably 120 to 300°C.

The graft ratio of the vinyl compound having a polar group or the derivative thereof in the modified product is usually 0.01 to 15 mass%, and preferably 0.05 to 10 mass% of the whole of the modified product taken as 100 mass%.

⟨Additional components⟩

The present composition may include additional components other than the resins (A) and the (co)polymer (B) as long as the object of the present invention is not impaired.

Examples of such additional components include resins other than the resins (A) and the (co)polymers (B), oils, weather stabilizers, heat stabilizers, antioxidants, ultraviolet absorbers, antistatic agents, antislip agents, antiblocking agents, antifogging agents, nucleating agents, lubricants, pigments, dyes, anti-aging agents, hydrochloric acid absorbers, inorganic or organic fillers, organic or inorganic foaming agents, crosslinking agents, co-crosslinking agents, crosslinking aids, adhesives, softeners and flame retardants.

(Methods for producing resin compositions)

The present composition may be produced by any method without limitation, and may be obtained by mixing the resins (A), the (co)polymer (B), and optionally the additional components in a predetermined ratio by a known technique.

In an embodiment of the present invention, a method for producing a resin composition includes a step of

mixing two or more kinds of polyolefin resins (A), and an ethylene/α-olefin copolymer (B') produced by the process (α) described above and satisfying the requirements (b-1) to (b-3) described hereinabove, the copolymer (B') being added so that the content thereof is 0.05 to 10 mass%.

For example, the above mixing step may be performed by mixing (kneading) the resins (A), the (co)polymer (B) (the copolymer (B')) and additional components together using a mixing (kneading) device such as an extruder, a Banbury mixer, a mixing roll or a Henschel mixer.

The resins (A) may be mixed (kneaded) together with constituent components for constituting the present composition other than the resins (A), or may be added to and mixed (kneaded) together with a composition that includes all the constituent components for constituting the present composition other than the resins (A) at the final stage of the production of the present composition. Alternatively, part of the resins (A) may be mixed (kneaded) together with constituent components for constituting the present composition other than the resins (A), and the remaining part of the resins (A) may be added and mixed (kneaded) at the final stage of the production of the present composition.

The same applies to the (co)polymer (B) and the additional components that are optionally used.

((Shaped articles (fibers, films, sheets)))

Shaped articles, in particular, fibers, films and sheets according to an embodiment of the present invention are formed from the present composition described above.

These articles may be formed by known methods without limitation. Particularly because the present composition is excellent in formabilities, any known methods may be used without limitation.

For example, the present composition may be formed into a shaped article having a desired shape by a known method such as injection molding, extrusion, compression molding, blow molding, vacuum forming or expansion molding.

The shaped articles have good tensile properties. When the shaped article is a fiber, the fiber stretches well and exhibits excellent flexibility. By bonding or binding the fibers, a woven textile or nonwoven fabric (a sheet) having good stretchability and flexibility may be obtained. That is, an embodiment of the present invention provides a woven textile or nonwoven fabric (a sheet) that includes fibers formed from the present composition.

When the shaped article is a film or a sheet, the film or sheet has high transparency and may be composed of a single layer or multiple layers. The film or sheet may be suitably used as, for example, a packaging material.

Further, the shaped article may be a sheet in which the fibers or the films described above are stacked on top of one another.

While films and sheets are not particularly distinguished in the present specification, films are usually membranes having a thickness of less than 250 μm, and sheets are usually thin plates having a thickness of 250 μm or more.

EXAMPLES

Hereinbelow, the present invention will be described in greater detail based on Examples. However, it should be construed that the scope of the present invention is not limited to such Examples.

[Synthesis Example 1] (Synthesis of [methylphenylmethylene($\eta^5$-cyclopentadienyl) ($\eta^5$-2, 7-di-t-butylfluorenyl)]zirconium dichloride)

(i) Synthesis of 6-methyl-6-phenylfulvene

In a nitrogen atmosphere, 7.3 g (101.6 mmol) of lithium cyclopentadiene and 100 mL of dehydrated tetrahydrofuran were added to a 200 mL three-necked flask and were stirred. The resultant solution was cooled in an ice bath, and 15.0 g (111.8 mmol) of acetophenone was added thereto dropwise. Thereafter, the mixture was stirred at room temperature for 20 hours, and the solution obtained was quenched with a dilute aqueous hydrochloric acid solution. 100 mL of hexane was added to extract soluble components, and the organic layer obtained was washed with water and saturated brine separately, and was dried over anhydrous magnesium sulfate. Thereafter, the solvent was distilled off. The resultant viscous liquid was separated by column chromatography (hexane). Thus, the target product (6-methyl-6-phenylfulvene) was obtained as a red viscous liquid.

(ii) Synthesis of methyl(cyclopentadienyl)(2,7-di-t-butylfluorenyl)(phenyl)methane

In a nitrogen atmosphere, a 100 mL three-necked flask was loaded with 2.01 g (7.20 mmol) of 2,7-di-t-butylfluorene and 50 mL of dehydrated t-butyl methyl ether. While performing cooling in an ice bath, 4.60 mL (7.59 mmol) of an n-butyllithium/hexane solution (1.65 M) was gradually added. The mixture was stirred at room temperature for 16 hours. 1.66 g (9.85 mmol) of 6-methyl-6-phenylfulvene was added thereto, and the mixture was heated and stirred under

reflux for 1 hour. Thereafter, 50 mL of water was gradually added while performing cooling in an ice bath. The resultant two-layer solution was transferred to a 200 mL separatory funnel. 50 mL of diethyl ether was added thereto and the mixture was shaken several times. The aqueous layer was removed, and the organic layer obtained was washed with 50 mL of water three times and with 50 mL of saturated brine one time. Thereafter, the organic layer was dried over anhydrous magnesium sulfate for 30 minutes, and the solvent was distilled off under reduced pressure. A small amount of hexane was added to prepare a solution. Ultrasonication of the solution resulted in precipitation of a solid. The solid was collected, washed with a small amount of hexane, and dried under reduced pressure to give 2.83 g of methyl(cyclopentadienyl)(2,7-di-t-butylfluorenyl)(phenyl)methane as a white solid.

(iii) Synthesis of [methylphenylmethylene($\eta^5$-cyclopentadienyl) ($\eta^5$-2,7-di-t-butylfluorenyl)]zirconium dichloride

In a nitrogen atmosphere, a 100 mL Schlenk tube was sequentially loaded with 1.50 g (3.36 mmol) of methyl(cyclopentadienyl)(2,7-di-t-butylfluorenyl) (phenyl)methane, 50 mL of dehydrated toluene and 570 $\mu$L (7.03 mmol) of THF. While performing cooling in an ice bath, 4.20 mL (6.93 mmol) of an n-butyllithium/hexane solution (1.65 M) was gradually added. The mixture was stirred at 45°C for 5 hours. The solvent was distilled off under reduced pressure, and 40 mL of dehydrated diethyl ether was added. A red solution was thus obtained. While performing cooling in a methanol/dry ice bath, 728 mg (3.12 mmol) of zirconium tetrachloride was added to the obtained red solution. The mixture was stirred for 16 hours while gradually increasing the temperature to room temperature, thereby forming a red-orange slurry. The solvent was distilled off from the slurry under reduced pressure, and the resultant solid was placed in a glove box, washed with hexane, and extracted with dichloromethane. After the solvent was distilled off under reduced pressure to obtain a concentrate, a small amount of hexane was added to the concentrate. Leaving the mixture at -20°C resulted in precipitation of a red-orange solid. The solid was washed with a small amount of hexane and was dried under reduced pressure. Thus, 1.20 g of [methylphenylmethylene($\eta^5$-cyclopentadienyl) ($\eta^5$-2, 7-di-t-butylfluorenyl)]zirconium dichloride was obtained as a red-orange solid.

[Production Example 1] (Synthesis of liquid ethylene/propylene copolymer using vanadium catalyst)

A 2 L volume continuous polymerization reactor equipped with a stirring blade and thoroughly purged with nitrogen was loaded with 1 L of dehydrated and purified hexane. A 96 mmol/L hexane solution of ethylaluminum sesquichloride ($Al(C_2H_5)_{1.5}\cdot Cl_{1.5}$) was continuously supplied at a rate of 500 mL/h for 1 hour. Further, a 16 mmol/L hexane solution of $VO(OC_2H_5)Cl_2$ as a catalyst, and hexane were continuously supplied at rates of 500 mL/h and 500 mL/h, respectively. On the other hand, the polymerization solution was continuously withdrawn from the top of the reactor so that the amount of the polymerization solution in the reactor would be constant at 1 L.

Next, 35 L/h ethylene gas, 35 L/h propylene gas and 80 L/h hydrogen gas were supplied through bubbling tubes. The copolymerization reaction was carried out at 35°C while circulating a refrigerant through a jacket attached to the outside of the reactor. In this manner, a polymerization solution including an ethylene/propylene copolymer was obtained.

The polymerization solution obtained was decalcified with hydrochloric acid and was poured into a large amount of methanol to separate the ethylene/propylene copolymer, which was then dried under reduced pressure at 130°C for 24 hours. A liquid ethylene/propylene copolymer (B-1) was thus obtained.

[Production Example 2]

An ethylene/propylene copolymer (B-2) was obtained in the same manner as in Production Example 1, except that the supply rates of ethylene gas, propylene gas and hydrogen gas in Production Example 1 were controlled appropriately so that the ethylene content in the obtainable copolymer would be 50 mol%.

[Production Example 3] (Synthesis of ethylene/propylene copolymer using zirconocene catalyst)

A 1 L internal volume glass polymerizer thoroughly purged with nitrogen was charged with 250 mL of decane, and the temperature in the system was raised to 130°C. Thereafter, 25 L/hr ethylene, 75 L/hr propylene and 100 L/hr hydrogen were continuously supplied into the polymerizer and were stirred at a stirring rotational speed of 600 rpm. Next, 0.2 mmol of triisobutylaluminum was added to the polymerizer, and a mixture obtained by premixing 1.213 mmol of MMAO (manufactured by Tosoh Finechem Corporation) and 0.00402 mmol of [methylphenylmethylene ($\eta^5$-cyclopentadienyl) ($\eta^5$-2, 7-di-t-butylfluorenyl)]zirconium dichloride in toluene for at least 15 minutes was added to the polymerizer to initiate polymerization. The polymerization was carried out at 130°C for 15 minutes while continuously suppling ethylene, propylene and hydrogen. Thereafter, the polymerization was terminated by the addition of a small amount of isobutyl alcohol to the system, and the unreacted monomers were purged. The polymer solution obtained was washed

with 100 mL of 0.2 mol/L hydrochloric acid three times and then with 100 mL of distilled water three times, and was dried over magnesium sulfate. Thereafter, the solvent was distilled off under reduced pressure, and the residue was dried at 80°C under reduced pressure overnight. An ethylene/propylene copolymer was thus obtained.

A 1 L internal volume stainless steel autoclave was loaded with 100 mL of a 0.5 mass% hexane solution of Pd/alumina catalyst and 500 mL of a 30 mass% hexane solution of the ethylene/propylene copolymer. The autoclave was tightly closed and was purged with nitrogen. Next, the temperature was raised to 140°C while performing stirring, and the inside of the system was purged with hydrogen. The pressure was increased to 1.5 MPa with hydrogen, and hydrogenation reaction was carried out for 15 minutes. Thus, 0.77 g of an ethylene/propylene copolymer (B-3) was obtained.

[Production Example 4] (Synthesis of ethylene/propylene copolymer using zirconocene catalyst)

A 2 L internal volume stainless steel autoclave thoroughly purged with nitrogen was loaded with 710 mL of heptane and 145 g of propylene. The temperature of the system was raised to 150°C, and the total pressure was increased to 3 MPaG by supplying 0.40 MPa of hydrogen and 0.27 MPa of ethylene. Next, 0.4 mmol of triisobutylaluminum, 0.0001 mmol of [methylphenylmethylene($\eta^5$-cyclopentadienyl) ($\eta^5$-2,7-di-t-butylfluorenyl)]zirconium dichloride and 0.001 mmol of N,N-dimethylanilinium tetrakis(pentafluorophenyl)borate were injected with nitrogen. Polymerization was initiated by performing stirring at a rotational speed of 400 rpm. Thereafter, only ethylene was continuously supplied to keep the total pressure at 3 MPaG, and the polymerization was carried out at 150°C for 5 minutes. The polymerization was terminated by the addition of a small amount of ethanol into the system, and unreacted ethylene, propylene and hydrogen were purged. The polymer solution obtained was washed with 1000 mL of 0.2 mol/L hydrochloric acid three times and then with 1000 mL of distilled water three times, and was dried over magnesium sulfate. The solvent was distilled off under reduced pressure, and the residue was dried at 80°C under reduced pressure overnight. Thus, an ethylene/propylene copolymer was obtained.

Next, hydrogenation reaction was performed in the same manner as in Production Example 3, except that the ethylene/propylene copolymer obtained above was used. Thus, 52.2 g of an ethylene/propylene copolymer (B-4) was obtained.

(Measurement of properties of copolymers)

Properties of the copolymers (B-1) to (B-4) obtained in Production Examples 1 to 4 were measured by the following methods. The results are described in Table 1.

[Methyl group index]

A $^1$H-NMR spectrum was measured using nuclear magnetic resonance apparatus EX270 manufactured by JEOL Ltd. Deuterated chloroform was used as a solvent. The sample concentration was 55 mg/0.6 mL, and the measurement temperature was ambient. The observation nuclear was $^1$H (270 MHz), the sequence was single pulse, the pulse width was 6.5 μsec (45° pulse), the repetition time was 5.5 seconds, and the cumulative number was 16. The reference for the determination of chemical shifts was the solvent peak (7.24 ppm) assigned to $CHCl_3$ in deuterated chloroform.

With respect to the $^1$H-NMR spectrum measured as described above, the methyl group index was determined by calculating the ratio of the integral of a peak observed in the range of 0.50 to 1.15 ppm to the integral of peaks observed in the range of 0.50 to 2.20 ppm.

[Ethylene content]

A $^{13}$C-NMR spectrum was measured using nuclear magnetic resonance apparatus ECP500 manufactured by JEOL Ltd. The solvent used was orthodichlorobenzene/deuterated benzene (80/20% by volume) mixed solvent. The sample concentration was 55 mg/0.6 mL, and the measurement temperature was 120°C. The observation nuclear was $^{13}$C (125 MHz), the sequence was single pulse proton decoupling, the pulse width was 4.7 μsec (45° pulse), the repetition time was 5.5 seconds, and the cumulative number was at least 10,000. The reference for the determination of chemical shifts was 27.50 ppm.

With respect to the $^{13}$C-NMR spectra measured as described above, the ethylene contents in the copolymers (B-1) to (B-4) were determined based on the description in "Koubunshi Bunseki Handbook (Polymer Analysis Handbook)" (published from Asakura Publishing Co., Ltd., pp. 163-170) and the reports of G. J. Ray et al. (Macromolecules, 10, 773 (1977)), J. C. Randall et al. (Macromolecules, 15, 353 (1982)) and K. Kimura et al. (Polymer, 25, 4418 (1984)).

[Molecular weight (Mw) and molecular weight distribution (Mw/Mn)]

The Mw and Mw/Mn of the copolymers (B-1) to (B-4) were measured using the high-performance GPC measurement apparatus described below under the following conditions.

High-performance GPC measurement apparatus: HLC 8320GPC manufactured by TOSOH CORPORATION

Mobile phase: THF (manufactured by Wako Pure Chemical Industries, Ltd., stabilizer-free, liquid chromatography grade)

Columns: Two TSKgel Super Multipore HZ-M columns manufactured by TOSOH CORPORATION were connected in series.

Sample concentration: 5 mg/mL
Mobile phase flow rate: 0.35 mL/min
Measurement temperature: 40°C
Standard sample for calibration curve: PStQuick MP-M manufactured by TOSOH CORPORATION

[Melting point]

The melting points of the copolymers (B-1) to (B-4) were measured using X-DSC-7000 manufactured by Seiko Instruments Inc. Specifically, the measurement was performed by the following method.

Approximately 8 mg of a sample was added into an easily sealable aluminum sample pan, and the pan was arranged in a DSC cell. The DSC cell was placed in a nitrogen atmosphere, and the temperature was increased from room temperature to 150°C at 10°C/min, then held at 150°C for 5 minutes, and lowered at 10°C/min to cool the DSC cell to -100°C (cooling process). Subsequently, the DSC cell was held at -100°C for 5 minutes, and the temperature was increased to 150°C at 10°C/min. With respect to the enthalpy curve recorded during the heating process, the temperature at the peak top was adopted as the melting point (Tm), and the total amount of endothermic heat associated with melting was determined as the heat of fusion ($\Delta$H). The sample was deemed as having no melting point when any peak was not observed or when the value of $\Delta$H was 1 J/g or less. The Tm and the $\Delta$H were determined based on JIS K7121.

[Table 1]

| Prod. Ex. | Copolymer | Methyl group index (%) | Mw | Mw/Mn | Ethylene content (mol%) | Melting point (°C) |
|---|---|---|---|---|---|---|
| 1 | B-1 | 47.6 | 4,170 | 1.7 | 48 | n.d. |
| 2 | B-2 | 46.9 | 8,710 | 1.9 | 50 | n.d. |
| 3 | B-3 | 48.2 | 4,170 | 1.7 | 49 | n.d. |
| 4 | B-4 | 49.0 | 8,560 | 1.8 | 53 | n.d. |

In the table, n.d. indicates that no melting point was observed.

[Production Example 5] (Production of polypropylene-based masterbatch containing copolymer (B-1))

Prime Polypro S119 (manufactured by Prime Polymer Co., Ltd., a resin distinct from the (co)polymer (B), hereinafter also written as "A-1") that was a homopolypropylene was melt kneaded with a twin-screw reaction extruder (manufactured by TECHNOVEL CORPORATION, L/D = 45) at a cylinder temperature of 220°C and a screw rotational speed of 400 rpm. The throughput was 1.9 kg/h.

While maintaining the above conditions, the copolymer (B-1) was fed at 0.211 kg/h through the feed zone of the extruder. The strand extruded from the die was cooled and then cut with a strand cutter. Thus, pellets of a masterbatch containing 10 mass% of the copolymer (B-1) (hereinafter, also written as the "masterbatch 1") were obtained.

[Production Example 6] (Production of polypropylene-based masterbatch containing copolymer (B-2))

Pellets of a masterbatch containing 10 mass% of the copolymer (B-2) (hereinafter, also written as the "masterbatch 2") were obtained in the same manner as in Production Example 5, except that the copolymer (B-2) was fed in place of the copolymer (B-1).

[Production Example 7] (Production of polypropylene-based masterbatch containing copolymer (B-3))

Pellets of a masterbatch containing 10 mass% of the copolymer (B-3) (hereinafter, also written as the "masterbatch 3") were obtained in the same manner as in Production Example 5, except that the copolymer (B-3) was fed in place of the copolymer (B-1).

[Production Example 8] (Production of polypropylene-based masterbatch containing copolymer (B-4))

Pellets of a masterbatch containing 10 mass% of the copolymer (B-4) (hereinafter, also written as the "masterbatch 4") were obtained in the same manner as in Production Example 5, except that the copolymer (B-4) was fed in place of the copolymer (B-1).

[Example 1]

88.5 Parts by mass of A-1, 4 parts by mass of high-density polyethylene HI-ZEX 2200J (manufactured by Prime Polymer Co., Ltd., a resin distinct from the (co)polymer (B), hereinafter also written as "A-2") and 7.5 parts by mass of the masterbatch 1 were mixed together sufficiently. The mixture was melt kneaded with a twin-screw reaction extruder (manufactured by TECHNOVEL CORPORATION) at a cylinder temperature of 220°C and a screw rotational speed of 400 rpm, and was extruded from a die. The strand extruded from the die was cooled and then cut with a strand cutter. Thus, pellets of a polyolefin resin composition were obtained.

[Examples 2 to 6, Comparative Example 1 and Comparative Example 3]

Pellets of a polyolefin resin composition were obtained in the same manner as in Example 1, except that the components described in the Formulation column in Table 2 or 3 were used in the amounts (numerical values [parts by mass]) described in the Formulation column.
Incidentally, "C-1" used in Comparative Example 3 is polyethylene wax EP-700 (manufactured by Baker Hughes, methyl group index: 8%, ethylene content: 99 mol%, melting point: 94°C).

[Comparative Example 2]

85 Parts by mass of A-1 and 4 parts by mass of A-2 were mixed together sufficiently. The mixture was melt kneaded with a twin-screw reaction extruder (manufactured by TECHNOVEL CORPORATION) at a cylinder temperature of 220°C and a screw rotational speed of 400 rpm. The throughput was 1.9 kg/h.
While maintaining the above conditions, the copolymer (B-1) was fed at 0.235 kg/h through the feed zone of the extruder. The strand extruded from the die was cooled and then cut with a strand cutter. Thus, pellets of a polyolefin resin composition were obtained.

(Measurement of properties of polyolefin resin compositions)

With use of a hot press machine (manufactured by Shinto Metal Industries, Ltd.) and a press die having a thickness of 2 mm or 0.5 mm, the pellets obtained were each pressed flat for a total of 10 minutes under the conditions in which the pellets were pressed at 200°C and 1 MPa for 5 minutes, at 200°C and 4 MPa for 1 minute, and at 20°C and 4 MPa for 4 minutes. Two types of pressed sheets were thus prepared. The pressed sheets of each type were punched and/or cut to give various test pieces, which were then tested to measure properties described below. The results are described in Table 2 or 3.

[Tensile test]

Based on JIS K7161-1 and 2, a 5A test piece was tested to measure the nominal tensile strain at break and the tensile modulus under conditions of a load range of 2 kN and a test speed of 20.0 mm/min. The results were evaluated in accordance with the following criteria.

Nominal tensile strain at break

○**:** Nominal tensile strain at break was not less than 6.5%.

△: Nominal tensile strain at break was not less than 6.0% and less than 6.5%.
×: Nominal tensile strain at break was less than 6.0%.

Tensile modulus

○: Tensile modulus was less than 1750 MPa.
x: Tensile modulus was 1750 MPa or more.

[Total luminous transmittance]

The 0.5 mm thick pressed sheets were tested based on JIS K7361-1 to determine the total luminous transmittance. The results were evaluated in accordance with the following criteria.

○: Total luminous transmittance was not less than 90.5%.
x: Total luminous transmittance was less than 90.5%.

[Throughput and torque current per throughput]

From the throughput and the torque current during kneading of the resin with the twin-screw reaction extruder, the torque current per throughput was calculated using the equation below and was evaluated in accordance with the criteria described below. All the values were measured after the operation status had stabilized. The "throughput" was calculated by dividing the mass of the resin composition by the amount of operation time, and the "torque current" was determined by reading the value of an ammeter provided on a control panel of the extruder.

$$\text{Torque current per throughput} = (\text{torque current})/(\text{throughput})$$

○: Torque current per throughput was less than 8.70 A/(kg/h)
△: Torque current per throughput was 8.70 A/(kg/h) or more and less than 8.80 A/(kg/h).
x: Torque current per throughput was 8.80 A/(kg/h) or more.

[Resin pressure]

The resin pressure during kneading of the resin with the twin-screw reaction extruder was measured with a pressure gauge attached to a barrel immediately before the extruder die, and was evaluated in accordance with the criteria described below. The pressure was measured after confirming that the operation status had stabilized.

○: Resin pressure was less than 0.75 MPa.
x: Resin pressure was 0.75 MPa or more.

[Table 2]

| | | Comp. Ex. 1 | Ex. 1 | Ex. 2 | Ex. 3 | Ex. 4 |
|---|---|---|---|---|---|---|
| Formulation (Parts by mass) | (A-1) | 96 | 88.5 | 86 | 76 | 86 |
| | (A-2) | 4 | 4 | 4 | 4 | 4 |
| | Masterbatch 1 | - | 7.5 | 10 | 20 | - |
| | Masterbatch 2 | - | - | - | - | 10 |

(continued)

| | | Comp. Ex. 1 | Ex. 1 | Ex. 2 | Ex. 3 | Ex. 4 |
|---|---|---|---|---|---|---|
| Chemical makeup of composition (Parts by mass) | (A-1) | 96 | 95.25 | 95 | 94 | 95 |
| | (A-2) | 4 | 4 | 4 | 4 | 4 |
| | (B-1) | - | 0.75 | 1 | 2 | - |
| | (B-2) | - | - | - | - | 1 |
| Nominal tensile strain at break | | × | △ | △ | ○ | △ |
| Tensile modulus | | × | ○ | ○ | ○ | ○ |
| Total luminous transmittance | | × | ○ | ○ | ○ | ○ |
| Torque current per throughput | | × | ○ | ○ | △ | ○ |
| Resin pressure | | × | ○ | ○ | ○ | ○ |

[Table 3]

| | | Ex. 5 | Ex. 6 | Comp. Ex. 2 | Comp. Ex. 3 |
|---|---|---|---|---|---|
| Formulation (Parts by mass) | (A-1) | 66 | 46 | 85 | 95 |
| | (A-2) | 4 | 4 | 4 | 4 |
| | Masterbatch 3 | 30 | - | - | - |
| | Masterbatch 4 | - | 50 | - | - |
| | (B-1) | - | - | 11 | - |
| | (C-1) | - | - | - | 1 |
| Chemical makeup of composition (Parts by mass) | (A-1) | 93 | 91 | 85 | 95 |
| | (A-2) | 4 | 4 | 4 | 4 |
| | (B-1) | - | - | 11 | - |
| | (B-3) | 3 | - | - | - |
| | (B-4) | - | 5 | - | - |
| | (C-1) | - | - | - | 1 |
| Nominal tensile strain at break | | ○ | △ | × | △ |
| Tensile modulus | | ○ | ○ | ○ | ○ |
| Total luminous transmittance | | ○ | ○ | ○ | × |
| Torque current per throughput | | ○ | ○ | ○ | ○ |
| Resin pressure | | ○ | ○ | ○ | ○ |

Comparative Example 1 in which no (co)polymers (B) were used resulted in poor stretchability (small nominal tensile strain at break) and low flexibility (high tensile modulus). Further, the shaped article was turbid and had a low value of total luminous transmittance. Furthermore, the composition had a high torque current per throughput and a high resin pressure, and was thus shown to cause a heavy load on an extruder when kneaded, namely, to have poor formabilities.

In contrast, Examples 1 to 6 which involved the (co)polymer (B) attained good stretchability and high flexibility. Excellent transparency was also confirmed from the total luminous transmittance. Further, the compositions had a low torque current per throughput and a low resin pressure, and were thus shown to be a minor load on the extruder when kneaded, namely, to have excellent formabilities.

In Comparative Example 2 in which 11 mass% of the α-olefin (co)polymer (B) was added, flexibility was high and excellent transparency was also confirmed from the total luminous transmittance. Further, the torque current per

throughput and the resin pressure were low, showing that the composition placed a minor load on the extruder at the time of kneading, namely, had excellent formabilities. However, the composition was markedly lowered in tensile elongation (small nominal tensile strain at break) on account of its containing a large amount of the liquid polymer.

In Comparative Example 3 in which 1 mass% of wax (C-1) was added in place of the α-olefin (co)polymer (B), the elongation determined by the tensile test was large and the flexibility was also high. Further, the torque current per throughput and the resin pressure were low, showing that the composition placed a minor load on the extruder at the time of kneading, namely, had excellent formabilities. On the other hand, the composition had a low total luminous transmittance and was shown to have poor transparency, probably because the wax (C-1) had a structure having a low methyl group index and failed to sufficiently compatibilize the polypropylene and the polyethylene, and also because the wax (C-1) had crystallinity.

## Claims

1. A resin composition comprising:

   two or more kinds of polyolefin resins (A); and
   an α-olefin (co)polymer (B) satisfying requirements (b-1) to (b-3) described below,
   a content of the α-olefin (co)polymer (B) being 0.05 to 10 mass%,
   (b-1) a methyl group index is 40 to 60% wherein the methyl group index is a ratio of an integral of a peak observed in a range of 0.50 to 1.15 ppm to an integral of peaks observed in a range of 0.50 to 2.20 ppm in a $^1$H-NMR spectrum of a solution of the α-olefin (co)polymer (B) in deuterated chloroform, positions of the peaks being calculated relative to a solvent peak at 7.24 ppm assigned to $CHCl_3$ in deuterated chloroform as a reference,
   (b-2) a weight average molecular weight determined by gel permeation chromatography is 1,500 to 20,000,
   (b-3) no melting point is observed at temperatures ranging from -100 to 150°C in differential scanning calorimetry.

2. The resin composition according to claim 1, wherein the content of the α-olefin (co)polymer (B) is 0.5 to 6 mass%.

3. The resin composition according to claim 1 or 2, wherein the weight average molecular weight of the α-olefin (co)polymer (B) is 1,500 to 14,000.

4. The resin composition according to any one of claims 1 to 3, wherein the polyolefin resins (A) include an ethylene resin and a propylene resin.

5. The resin composition according to any one of claims 1 to 4, wherein the polyolefin resins (A) include an ethylene resin and a propylene resin, and
   contents of the ethylene resin and of the propylene resin are 1 to 20 mass% and 80 to 99 mass%, respectively, based on the total thereof taken as 100 mass%.

6. The resin composition according to any one of claims 1 to 5, wherein the polyolefin resins (A) include an ethylene resin and a propylene resin, and
   contents of the ethylene resin and of the propylene resin are 2 to 10 mass% and 90 to 98 mass%, respectively, based on the total thereof taken as 100 mass%.

7. A method for producing a resin composition, comprising a step of mixing:

   two or more kinds of polyolefin resins (A); and
   an ethylene/α-olefin copolymer (B') produced by a process (α) described below and satisfying requirements (b-1) to (b-3) described below, the copolymer (B') being added so that the content thereof is 0.05 to 10 mass%,
   (b-1) a methyl group index is 40 to 60% wherein the methyl group index is a ratio of an integral of a peak observed in a range of 0.50 to 1.15 ppm to an integral of peaks observed in a range of 0.50 to 2.20 ppm in a $^1$H-NMR spectrum of a solution of the copolymer (B') in deuterated chloroform, positions of the peaks being calculated relative to a solvent peak at 7.24 ppm assigned to $CHCl_3$ in deuterated chloroform as a reference,
   (b-2) a weight average molecular weight determined by gel permeation chromatography is 1,500 to 20,000,
   (b-3) no melting point is observed at temperatures ranging from -100 to 150°C in differential scanning calorimetry,
   the process (α): a process comprising a step of polymerizing ethylene and an α-olefin by solution polymerization in the presence of a catalyst system comprising:

a bridged metallocene compound (a) represented by the formula 1, and
at least one compound (b) selected from the group consisting of organoaluminum oxy compounds (b1) and compounds (b2) capable of reacting with the bridged metallocene compound (a) to form an ion pair,

[Chem. 1]

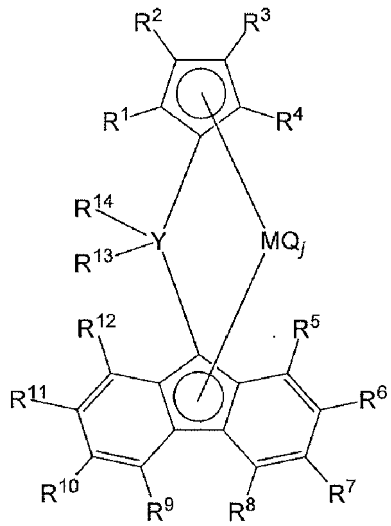

· · ·(Formula 1)

[in the formula 1, $R^1$, $R^2$, $R^3$, $R^4$, $R^5$, $R^8$, $R^9$ and $R^{12}$ are each independently a hydrogen atom, a hydrocarbon group or a silicon-containing hydrocarbon group and a plurality of these groups that are adjacent to one another may be linked together to form a ring structure,
$R^6$ and $R^{11}$ are the same as each other and are hydrogen atoms, hydrocarbon groups or silicon-containing hydrocarbon groups,
$R^7$ and $R^{10}$ are the same as each other and are hydrogen atoms, hydrocarbon groups or silicon-containing hydrocarbon groups,
$R^6$ and $R^7$ may bond to a C2-C3 hydrocarbon to form a ring structure,
$R^{10}$ and $R^{11}$ may bond to a C2-C3 hydrocarbon to form a ring structure,
$R^6$, $R^7$, $R^{10}$ and $R^{11}$ are not hydrogen atoms at the same time;
Y is a carbon atom or a silicon atom;
$R^{13}$ and $R^{14}$ are each independently an aryl group;
M is Ti, Zr or Hf;
Q independently at each occurrence is a halogen atom, a hydrocarbon group, an anionic ligand or a neutral ligand capable of coordinating to a lone electron pair; and
j is an integer of 1 to 4].

**8.** A shaped article formed from the resin composition according to any one of claims 1 to 6.

**9.** A fiber formed from the resin composition according to any one of claims 1 to 6.

**10.** A film formed from the resin composition according to any one of claims 1 to 6.

**11.** A sheet selected from a sheet formed from the resin composition according to any one of claims 1 to 6, a sheet comprising the fiber according to claim 9, and a sheet comprising the film according to claim 10.

**INTERNATIONAL SEARCH REPORT**

International application No. PCT/JP2020/012653

A. CLASSIFICATION OF SUBJECT MATTER
Int.Cl. C08F210/00(2006.01)i, C08F210/02(2006.01)i, C08F210/06(2006.01)i, C08L23/00(2006.01)i
FI: C08L23/00, C08F210/02, C08F210/06, C08F210/00
According to International Patent Classification (IPC) or to both national classification and IPC

B. FIELDS SEARCHED
Minimum documentation searched (classification system followed by classification symbols)
Int.Cl. C08F, C08L

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 60-202137 A (MITSUI PETROCHEMICAL INDUSTRIES, LTD.) 12.10.1985 (1985-10-12), claims, example 1 | 1-6, 8-11<br>7 |
| A | JP 2006-194798 A (SUMITOMO ELECTRIC INDUSTRIES, LTD.) 27.07.2006 (2006-07-27), fig. 1 | 1-11 |
| Y | JP 2016-183206 A (MITSUI CHEMICALS, INC.) 20.10.2016 (2016-10-20), paragraphs [0128]-[0144] | 7 |
| X<br>Y | JP 2001-294717 A (MITSUI CHEMICALS, INC.) 23.10.2001 (2001-10-23), claims, paragraph [0019], examples | 1-4, 8-11<br>7 |
| A | JP 2007-99820 A (TECHNO POLYMER CO., LTD.) 19.04.2007 (2007-04-19), paragraph [0082] | 1-11 |
| A | JP 2008-37963 A (IDEMITSU KOSAN CO., LTD.) 21.02.2008 (2008-02-21), paragraph [0033] | 1-11 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03.06.2020 | 16.06.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/012653

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 8-259751 A (MITSUBISHI CHEMICAL CORPORATION) 08.10.1996 (1996-10-08), claims, paragraphs [0016], [0018] | 1-6, 8-11<br>7 |
| A | JP 10-237239 A (SUMITOMO BAKELITE CO., LTD.) 08.09.1998 (1998-09-08), entire text | 1-11 |
| A | JP 2007-536396 A (DOW GLOBAL TECHNOLOGIES INC.) 13.12.2007 (2007-12-13), entire text | 1-11 |

Form PCT/ISA/210 (second sheet) (January 2015)

**INTERNATIONAL SEARCH REPORT**
Information on patent family members

International application No.
PCT/JP2020/012653

| | | |
|---|---|---|
| JP 60-202137 A | 12.10.1985 | (Family: none) |
| JP 2006-194798 A | 27.07.2006 | (Family: none) |
| JP 2016-183206 A | 20.10.2016 | (Family: none) |
| JP 2001-294717 A | 23.10.2001 | US 2001/0018465 A1<br>claims, paragraph [0019], examples<br>CN 1312319 A |
| JP 2007-99820 A | 19.04.2007 | (Family: none) |
| JP 2008-37963 A | 21.02.2008 | US 2009/0312211 A1<br>paragraphs [0085]-[0088]<br>EP 2053117 A1<br>KR 10-2009-0050051 A<br>CN 101495607 A |
| JP 8-259751 A | 08.10.1996 | (Family: none) |
| JP 10-237239 A | 08.09.1998 | (Family: none) |
| JP 2007-536396 A | 13.12.2007 | US 2007/0203273 A1<br>whole document<br>WO 2005/111145 A1<br>EP 1745100 A1<br>CN 1946791 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S6259646 A
- JP 2002080653 A
- WO 2016068312 A
- WO 200034420 A
- JP S62121710 A
- WO 200429062 A
- JP 2004175707 A
- WO 200127124 A
- EP 2921509 A
- US 4960878 A
- US 5041584 A
- KR 100551147
- JP H01501950 A
- JP H03179005 A
- JP H03207703 A
- JP H03207704 A
- US 5321106 A
- JP 2004051676 A


### Non-patent literature cited in the description


- Koubunshi Bunseki Handbook (Polymer Analysis Handbook). Asakura Publishing Co, 163-170
- *Tosoh Research & Technology Review,* 2003, vol. 47, 55
- **G. J. RAY et al.** *Macromolecules,* 1977, vol. 10, 773
- **J. C. RANDALL et al.** *Macromolecules,* 1982, vol. 15, 353
- **K. KIMURA et al.** *Polymer,* 1984, vol. 25, 4418